**Europäisches Patentamt**

**European Patent Office**

**Office européen des brevets**

(19)

(11) Veröffentlichungsnummer: **0 504 667 A2**

## (12) EUROPÄISCHE PATENTANMELDUNG

(21) Anmeldenummer: **92103773.5**

(22) Anmeldetag: **05.03.92**

(51) Int. Cl.5: **H04J 3/14**

(30) Priorität: **22.03.91 DE 4109537**

(43) Veröffentlichungstag der Anmeldung:
**23.09.92 Patentblatt 92/39**

(84) Benannte Vertragsstaaten:
**AT BE CH DE DK ES FR GB GR IT LI NL SE**

(71) Anmelder: **SIEMENS AKTIENGESELLSCHAFT**
**Wittelsbacherplatz 2**
**W-8000 München 2(DE)**

(72) Erfinder: **Labusch, Reinhard, Dipl.-Ing.**
**Peter-Rosegger-Strasse 25**
**W-8905 Mering(DE)**

(54) **Verfahren und Anordnung zum Übertragen von Alarmhinweisen in einem flexiblen Multiplexsignal-Multiplexer.**

(57) Im System-Kommunikationskanal (SYS-COM) eines flexiblen Multiplexers können Kollisionen zwischen Datenübertragungsblöcken auftreten, so daß möglicherweise gerade derjenige zurückgestellt wird, der einem Controller (CTR) eine dringende Alarmmeldung übermitteln möchte. Außerdem erfährt dieser nicht, wenn eine Anschlußeinheit (TA1, TA2, LA) fehlt. Beide Probleme werden mit einer Anforderungsleitung (RL) gelöst, die alle Anschlußeinheiten (TA1, TA2, LA) mit dem Controller (CTR) im Zeitmultiplex verbindet. Jeder Anschlußeinheit (TA1, TA2, LA) ist ein individueller Zeitschlitz zugeordnet, in dem diese ein Codewort mit Alarmhinweisen unterschiedlicher Dringlichkeit zum Controller (CTR) senden kann. Umgekehrt kann dieser die Anschlußeinheiten (TA1, TA2, LA) auf ein Ausnahme-Codewort abfragen, daß nur bei fehlender Anschlußeinheit (TA1, TA2, LA) gesendet wird. Dieses Verfahran ist bei Netzabschluß-Multiplexern (NTMX) einsetzbar.

FIG 1

In dem Buch "Digitale Nachrichtenübertragung", Teil 2, Crossconnect- und Multiplextechnik, Siemens Aktiengesellschaft, 1990, Bestell-Nr. A19100-L531-F302, Seiten 51 bis 56 ist ein Netzabschluß-Multiplexer NTMX beschrieben. In diesem erledigt ein Controller zentrale Aufgaben. Dieser hat Schnittstellen zu einem Bediengerät oder zu einem Network Management System nach außen und zu jeder Anschlußeinheit im System, zum Koppelfeld sowie zur Taktzentrale. Sämtliche Betriebsparameter der Anschlußeinheiten können über die externen Schnittstellen und den Controller eingestellt werden. Außerdem werden Alarminformationen von den Schnittstellen zum Controller und von dort aus zu dem Bediengerät oder dem Network Management System übertragen.

In einem älteren Vorschlag (89120388.7) ist ein Controller-Bussystem für einen Netzabschluß-Multiplexer beschrieben, der auf einem Haupt- und sieben Erweiterungs-Baugruppenträgern aufgebaut ist. Jeder von diesen weist für seine teilnehmer- und leitungsseitigen Anschlußeinheiten ein eigenes Dreileitersystem für Senden, Empfangen und Steuern auf. Ein Controller auf dem Haupt-Baugruppenträger tauscht über ein Vierdrahtsystem, über Entkopplungsglieder und über die Dreileitersysteme interne Daten mit allen Kommunikationssteuer-Bausteinen aus. Durch die Aufteilung in acht Dreileitersysteme kann der Controller mehr Kommunikationssteuer-Bausteine betreiben als dies mit einem möglich ist.

Aus der Druckschrift "Planungshilfen Text- und Datenverkehr", Stand April 1980, herausgegeben von der Siemens AG, Bereich Fernschreib- und Datenverkehr, Postfach 70 00 72, D-8000 München 70, Bestell-Nr. F200/122.09 PA 4804 Sul, Seiten 46 und 47 sind HDLC-Prozeduren (High Level Data Link Control) als Datenübertragungs-Steuerungsverfahren unter Verwendung von Datenübertragungsblocks bekannt.

Da sämtliche Anschlußeinheiten im Netzabschluß-Multiplexer an eine gemeinsame Sendeleitung angeschlossen sind, kann es auf dieser zu Kollisionen kommen, wenn zwei oder mehrere Anschlußeinheiten gleichzeitig mit dem Controller kommunizieren wollen. Dies kann zu unzulässigen Versögerungen führen, wenn eine Anschlußeinheit beispielsweise einen dringenden Alarm malden will.

Die zeitlichan Auswirkungen dieses Problems wurden bisher dadurch gemindert, daß die Anschlußeinheit, die mit der Informationsabgabe zuerst begonnen hatte, ihre Datenübertragung fortsetzen darf. Ist deren Übertragung abgeschlossen, beginnt eine der vorhar abgewiesenen Anschlußeinheiten nach einer Ruhezeit von ca. 8 bit mit ihrer Übertragung. Eine Bevorzugung nach der Alarmdringlichkeit wird dadurch erreicht, daß die Anschlußeinheit, die den dringenderen Alarm malden muß, ihre Übertragung bereits nach einer verkürzten Wartezeit, die kleinar 8 bit ist, beginnen darf.

Eine steckbare Anschlußeinheit des Netzabschluß-Multiplexers meldet sich selbständig beim Controller an, nachdem sie in den Baugruppenträger gesteckt worden ist. Der Controller erkennt damit zwar das Stecken einer neuen Anschlußeinheit; er hat aber keine Möglichkeit, ein Fehlen einer Anschlußeinheit zu registrieren.

Der im Anspruch 1 angegebenen Erfindung liegt das Problem zugrunde, den Controller besser über anstehende Alarme und deren Dringlichkeit sowie über ein Fehlen von Anschlußeinheiten zu informieren.

Der Vorteil der gefundenen Lösung besteht darin, das beide Probleme mit der Einführung einer vierten Leitung parallel zum bisherigen Dreileitersystem entfallen. Letzteres wird auch als System-Kommunikationskanal bezeichnet.

Eine vorteilhafte Weiterbildung des erfindungsgemäßen Verfahrens ist im Anspruch 2 angegaben. Diese erlaubt es, die Erfindung auch auf den Erweiterungs-Baugruppenträgern einzusetzen. Die Ansprüche 4 bis 6 enthalten Merkmale einer Anordnung zur Durchführung des Verfahrens.

Ein Auaführungsbeispiel der Erfindung ist in der Zeichnung dargestellt und wird im folgenden näher beschrieben.

Es zeigen:

Figur 1    die zur Erfindung gehörenden Elemente auf einem Haupt-Baugruppenträger und

Figur 2    die zur Erfindung gehörenden Elemente auf einem Erweiterungs-Baugruppanträger.

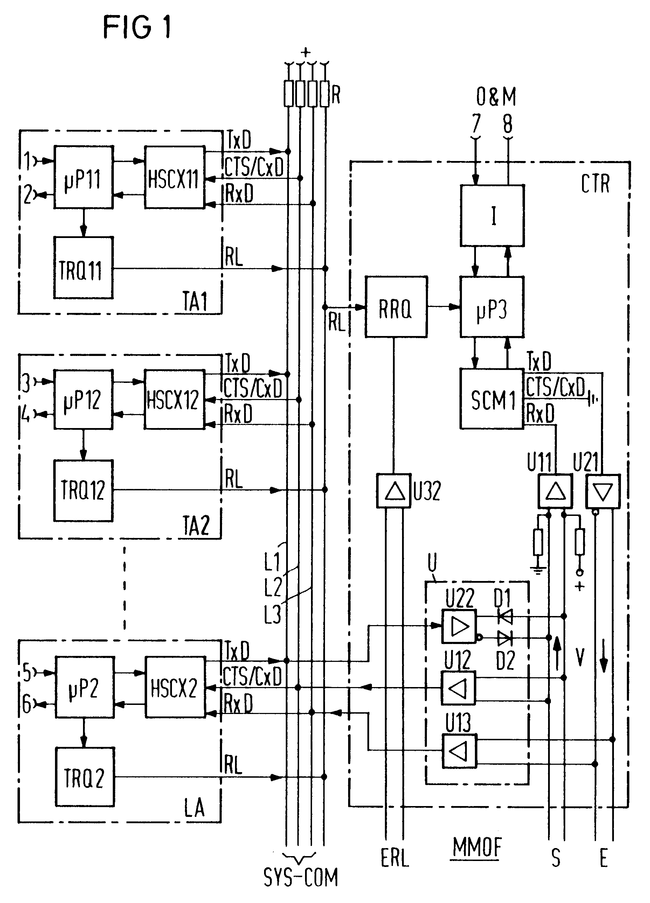

Figur 1 zeigt eine Schaltungsanordnung auf einem Haupt-Baugruppenträger MMOF mit zwei tailnehmerseitigen Anschlußeinheiten TA1 und TA2, mit einer leitungsseitigen Anschlußeinheit LA, mit einem unsymmetrischen System-Kommunikationskanal SYS-COM aus Leitern L1, L2 und L3, mit einer Anforderungsleitung RL und mit einem Controller CTR, der eine Umsetzereinheit U als Entkopplungsschaltung enthält. In der Regel sind eine Vielzahl weiterer teilnehmerseitiger Anschlußeinheiten oder eine oder mehrere leitungsseitige Anschlußeinheiten angeschlossen. Die zur Verarbeitung der externen Daten erforderlichen Baugruppen und Busse sind nicht gezeigt. Eine Ausnahme bilden Anschlüsse 7 und 8 für ein Betriebs- und Überwachungszentrum O&M.

Die teilnehmerseitige Anschlußeinheit TA1 enthält einen Anschlußeinheits-Mikroprozessor $\mu$P11, einen KommunikationssteuerBaustein HSCX11 und eine Anforderungs-Sendeeinrichtung TRQ11. Die teilnehmerseitige Anschlußeinheit TA2 umfaßt entsprechend einen Anschlußeinheits-Mikroprozessor µP12, einen Kommunikationssteuer-BausteinHSCX12 und eine Anforderungs-Sendeeinrichtung TRQ12. Die teilnehmerseitige Anschlußeinheit LA besteht aus einem Anschlußeinheits-Mikroprozessor µP2, einem Kommunikationssteuer-Baustein HSCX2 und einer Anforderungs-Sendeeinrichtung TRQ2. Der Controller CTR enthält eine Schnittstelle I, einen Controller-Mikroprozessor µP3, einen System-Kommunikations-Master SCM1, eine Anforderungs-Empfangseinrichtung RRQ, einen Symmetrie/Unsymmetrie-Umsetzer (Empfänger) U32, einen Unsymmetrie/Symmetrie-Umsetzer (Treiber) U21, einen Symmetrie/Unsymmetrie-Umsetzer (Empfänger) U11 und die Umsetzereinheit U. Diese besteht aus einem Unsymmetrie/Symmetrie-Umsetzer (Treiber) U22 mit offener Senke oder Quelle (Open-Drain-Ausgang) und Symmetrie/Unsymmetrie-Umsetzern (Empfängern) U12 und U13 in offener Kollektorschaltung (Open-Collector). Das Vierdrahtsystem V enthält eine Empfangs-Zweidrahtleitung E und eine Sende-Zweidrahtleitung S.

Die Trennung der Vierdrahtleitung V in zwei Übertragungsrichtungen hat den Vorteil, daß Daten vom System-Kommunikations-Master SCM1 im Controller CTR an alle hochohmigen Symmetrie/Unsymmetrie-Umsetzer U13 und U13' selbst dann noch abgesetzt werden können, wenn die Sende-Zweidrahtleitung S durch einen Defekt der zahlreichen niederohmigen Unsymmetrie/Symmetrie-Umsetzer U22 und U22' blockiert ist. Kommandos zum Sperren oder Abschalten von Fühler- und Geberschaltungen in den Anschlußeinheiten TA1, TA2, TA1', TA2', LA und LA' können somit noch greifen.

Die Wirkungsweise der Schaltungsanordnung auf dem Haupt-Baugruppenträger MMOF wird nachfolgend zusammen mit der auf dem Erweiterungs-Baugruppenträger EMOF erläutert.

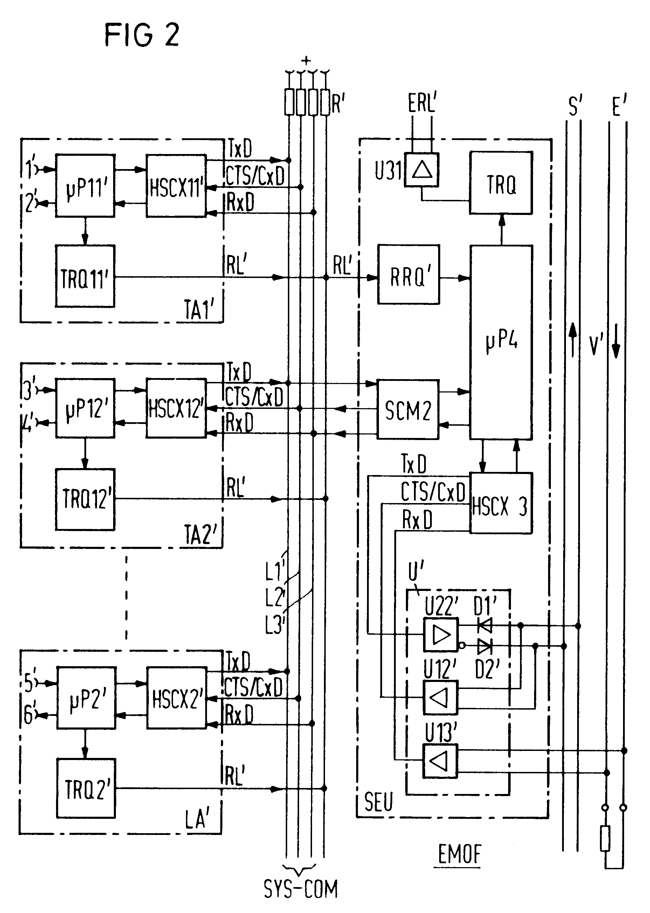

Figur 2 zeigt die Schaltungsanordnung auf dem Erweiterungs-Baugruppenträger EMOF. Diese enthält teilnehmerseitige Anschlußeinheiten TA1' und TA2', eine leitungsseitige Anschlußeinheit LA', eine Systemerweiterungs-Baugruppe SEU und ein Vierdrahtsystem V'. Die Systemerweiterungs-Baugruppe SEU umfaßt einen Gruppen-Mikroprozessor µP4, einen Kommunikationssteuer-Baustein HSCX3, einen System-Kommunikations-Master SCM2, einen Anforderungs-EmpfangsteilRRQ', einen Anforderungs-Sendeteil TRQ, einen Unsymmetrie/Symmetrie-Umsetzer (Treiber) U31 und eine Umsetzereinheit U'. Da mehrere Kommunikationssteuer-Bausteine wie HSCX11, HSCX12 oder HSCX2 über mehrere Umsetzer U22 oder U22' an die Sende-Zweidrahtleitung S im Vielfach angeschlossen sind, müssen die Zuführungsleitungen der Gegentaktausgänge Über Dioden D1, D2, D1' und D2'entkoppelt werden.

Der Apostroph sagt aus, daß die damit gekennzeichnete Einheit gleich der mit demselben Bezugszeichen ohne Apostroph ist. Auch hier sind die Einrichtungen zur Verarbeitung der externen Daten nicht dargestellt.

Als Kommunikationssteuer-Bausteine HSCX dienen integrierte Schaltungen SAB 82526 und als System-Kommunikations-Master integrierte Schaltungen MC 68606. Für Mikroprozessoren µP werden integrierte Schaltungen 80C188 und als Schnittstelle I wird eine integrierte Schaltung 85C30 verwendet. Die Unsymmetrie/Symmetrie--Umsetzer (Treiber) werden mit integrierten Schaltungen SN 75174 und die Symmetrie/Unsymmetrie-Umsetzer (Empfänger) werden mit integrierten Schaltungen SN 75175 realisiert.

In der teilnehmerseitigen Anschlußeinheit TA1 staht der Mikroprozessor µP11 übar Anschlüsse 1 und 2 im Austausch interner Daten mit dem nicht dargestellten Daten-Bussystem. Aufgrund empfangenar Befehle gibt er wiederum Befehle an den Kommunikationssteuer-Baustein HSCX11 ab und empfängt von diesem Quittungssignale. Über den Datenausgang TxD gelangen interne Daten an die Sendedatenleitung L1. Von der Empfangsdatenleitung L3 empfängt er wiederum interne Daten an seinem Dateneingang RxD. Weiter empfängt dieser Baustein HSCX11 von der Steuersignalleitung L2 Steuer- und Freigabesignale an seinem Eingang CTS/CxD. Das gleiche läuft bei den teilnahmerseitigen Anschlußeinheiten TA2, TA1' und TA2' ab.

Die leitungsseitigen Anschlußeinheiten LA und LA' unterscheiden sich von den teilnehmerseitigen Anschlußeinheiten TA1, TA2, TA1' und TA2' lediglich dadurch, daß ihr Daten-Bussystem über An schlüsse 5, 5' und 6, 6' Zeitmultiplexsignale einer höheren Hierarchiestufe von außen empfängt oder nach außen abgibt.

Der Controller-Mikroprozessor µP3 empfängt über den Eingang 7 der Schnittstelle I Befehle von der Betriebs- und Überwachungszentrale O&M und quittiert diese über den Ausgang 8. Weiter steht er im Datenaustausch mit dem System-Kommunikations-Master SCM1. Dieser sendet über seinen Datenausgang TxD Signale an den Unsymmetrie/Symmetrie-Umsetzer U21 aus, der diese über eine Empfangs-Zweidrahtleitung E weitergibt. Von einer Sende-Zweidrahtleitung S gelangen Signale über den Symmetrie/Unsymmetrie-Umsetzer U11 zum Dateneingang RxD des System-Kommunikations-Master SCM1. Interne Daten der Sendedatenleitungen L1 werden über den Unsymmetrie/Symmetrie-Umsetzer U22 und die Entkopplungsdioden D1 und D2 zur Sende-Zweidrahtleitung S und von dieser über den Symmetrie/Unsymmetrie-Umsetzer U12 zur Steuersignalleitung L2 übertragen. Signale von der Empfangs-Zweidrahtleitung E gelangen über den Symmetrie/Unsymmetrie-Umsetzer U13 zur Empfangsdatenleitung L3. Die Kommunikationssteuer-Bausteine HSCX11, HSCX12 und HSXCX2 üben eine Slave-Funktion aus.

Die symmetrische Anordnung der Sende- und Empfangs-Zweidrahtleitungen S und E bewirkt eine Unempfindlichkeit der Datenübertragung gegenüber Erdpotentialdifferenzen zwischen den einzelnen Baugruppenträgern MMOF und EMOF sowie gegen Beeinflussungsspannungen.

Die zussmmen acht Baugruppenträger MMOF und EMOF enthalten in der Praxis ca. 160 Baugruppen. Der Controller CTR auf dem Haupt-Baugruppentrager MMOF vermag jedoch keinen System-Kommunikationskanal SYS-COM zu allen diesen Baugruppen zu treiben. Es werden daher bis zu zwanzig Kommunikationssteuer-Bausteine HSCX an jeweils einen System-Kommunikationskanal SYS-COM pro Baugruppenträger MMOF und EMOF angeschlossen.

In den sieben Erweiterungs-Baugruppenträgern EMOF, von denen einer in Figur 2 gezeigt ist, erfolgt die Verbindung zwischen den Vierdrahtsystemen V und V' und der Anschluß an diese über die Umsetzereinheit U' in der Systemerweiterungs-Baugruppe SEU.

Der Datenauatausch im Controller-Bussystem erfolgt mittels eines HOLC-Protokolls in Form von Datenübertragungsblöcken mit einem Start-, Adressen-, Informations-, Prüf- und Stoppteil immer dann, wenn gelegentliche Meldungen zur Kanalauswahl, zur Pegeleinstellung, zu einer Betriebsartänderung oder Testsignale zu übertragen sind. Es könnte auf der Sendedatenleitung L1 auf dem Haupt-Baugruppenträger MMOF zu einer Kollision kommen, wenn die Kommunikationssteuer-Bausteine HSCX11, HSCX12 und HSCX2 im gleichberechtigten Spontanbetrieb (balanced mode) betrieben würden und wenn alle teilnehmerseitigen Anschlußeinheiten TA1 und TA2 sowie leitungsseitigen Anschlußeinheiten LA zu beliebiger Zeit ein Kommando senden dürften. Dasselbe gilt für den Erweiterungs-Baugruppenträger EMOF.

Derjenige Kommunikationssteuer-Baustein HSCX, der zuerst über seinen Symmetrie/Unsymmetrie-Umsetzer U12 bzw. U12' erfahren würde, daß sein Datenübertragungsblock auf der Sende-Zweidrahtleitung S verfälscht ist, also eine Kollision mit einem anderen Datenübertragungsblock vorläge, würde die Aussendung vorübergehend einstellen.

Die Kollisionserkennung ist eine Eigenschaft des Kommunikationssteuer-Bausteins HSCX, die durch Rückführung des Signals am Datenausgang TXD auf den Steuereingang CTS/CxD erreicht wird.

Die Einstellung einer Aussendung würde auch erfolgen, wenn ein dringender Alarm vorläge. Es ist deshalb die Haupt-Anforderungsleitung vorgesehen, auf der jeder Anschlußeinheit TA1, TA2 und LA im Zeitmultiplex ein eigener Zeitschlitz zugeteilt ist, übar den der Controller CTR erreichbar ist. Dazu wird ein Codewort beispielsweise vom Anschlußeinheits-Mikroprozessor $\mu$P11 über die Anforderungs-Sendeeinrichtung TRQ11, über die Haupt-Anforderungs-Leitung RL und über die Anforderungs-Empfangeinrichtung RRQ zum Controller-Mikroprozessor $\mu$P3 übertragen. Liegt kein Alarm vor, wird in jeden Zeitschlitz eine Ruhe-Codewort eingegeben. Wollen eine oder mahrere Anschlußeinheiten TA1, TA2 oder LA jedoch einen Alarm abgeben, wird in die jeweiligen Zeitschlitze ein Codewort eingespeist, dessen Bitfolge eine Aussage über die Dringlichkeit des Alarms gibt. Lediglich ein Ausnahme-Codewort mit einer Folge logischer Einsen wird nicht verwendet. Der Controller CTR wertet die eingehenden Alarmhinweise aus und nimmt über den System-Kommunikations-Master SCM1 mit der Anschlußeinheit Verbindung auf, deren Anforderung die höchste Dringlichkeit enthält.

Auf dem Erweiterungs-Baugruppenträger EMOF nimmt der GruppenMikroprozessor $\mu$P4 alle Alarmhinweise der Anschlußeinheiten TA1', TA2' und LA' entsprechend über eine Gruppen-Anforderungsleitung RL' entgegen, ruft aber nur mit einem Codewort über die Anforderungs-Sendeeinrichtung TRQ, über den Unsymmetrie/Symmetrie-Umsetzer U31, über den Symmetrie/Unsymmetrie-Umsetzer U32, über eine Ergänzungs-Anforderungsleitung ERL, ERL' und über die Anforderungs-Empfangseinrichtung RRQ den Controller-Mikroprozessor $\mu$P3, weil ihm nur ein Zeitschlitz auf der Haupt-Anforderungsleitung RL zusteht. Dieses Codewort kann eine Anschlußeinheit TA1', TA2' oder LA' bezeichnen, mit der sich der Controller CTR über den Kommunikationssteuer-Baustein HSCX3 mit Slavefunktion, den Gruppen-Mikroprozessor $\mu$PH und den System-Kommunikations-Master SCM2 in Verbindung setzen kann.

Die Anforderungsleitungen RL, RL' sind über einen Widerstand R, R' mit einem Logisch-Eins-Potential verbunden. Jede gesteckte Anschlußeinheit TA1, TA2, LA, TA1', TA2' und LA' sendet ein Ruhe Codewort. Wird eine gezogen, ergibt sich wegen des Widerstandes R, R' ein Ausnahme-Codewort in dem entsprechenden Zeitschlitz.

Die Mikroprozessoren $\mu$P3 des Controllers CTR in Figur 1 und $\mu$P4 der Systemerweiterungs-Baugruppe SEU in Figur 2 prüfen die Zeitschitze der ihnen zugeordneten Anschlußeinheiten TA1, TA2, LA bzw. TA1', TA2', LA' auf Ausnahme-Codewörter. Auf dem HauptBaugruppentrager MMOF wird eine fehlende Anschlußeinheit damit sofort entdeckt. Vom Erweiterungs-Baugruppenträger EMOF wird der Controller CTR in einem solchen Fall gerufen.

**Patentansprüche**

1. Verfahren zum Übertragen von Alarmhinweisen von jeweils einen Anschlußeinheits-Mikroprozessor ($\mu$P11, $\mu$P12, $\mu$P2) enthaltenden, steckbaren Anschlußeinheiten (TA1, TA2, LA) zu einem einen Controller-Mikroprozessor ($\mu$P3) enthaltenden Controller (CTR) in einem programmierbaren, flexiblen Digitalsignal-Multiplexer,
   **dadurch gekennzeichnet,**
   daß im Falle eines Alarms von einem oder mehreren Anschlußeinheits-Mikroprozessoren ($\mu$P11, $\mu$P12, $\mu$P2) über eine gemeinsame Haupt-Anforderungsleitung (RL) in jeweils einem, nur einem Anschlußeinheits-Mikroprozessor ($\mu$P11, $\mu$P12, $\mu$P2) zugeteilten und sich zyklisch wiederholenden Zeitschlitz, von einem Rahmentakt gesteuert, ein Codewort zum Controller-Mikroprozessor ($\mu$P3) gesandt wird, das in seiner Bitfolge mit Ausnahme einer Bitkombination (Ausnahme-Codewort) eine Aussage über die Dringlichkeitsstufe des Alarms enthält,
   daß beim Fahlen einer Anschlußeinheit (TA1, TA2, LA) während deren Zeitschlitzes ein Ausnahme-Codewort auf die Haupt-Anforderungsleitung (RL) ausgesendet wird und
   daß der Controller-Mikroprozessor ($\mu$P3) alle Zeitschlitze zyklisch auf das Auftreten von Ausnahme-Codewörtern überprüft.

2. Verfahren nach Anspruch 1,
   **dadurch gekennzeichnet,**
   daß mehrere Anschlußeinheiten (TA1', TA2', LA') zu einer Gruppe mit einer Gruppen-Anforderungsleitung (RL') zusammengefaßt werden,
   daß dieser Gruppe ein Zeitschlitz auf der Haupt-Anforderungsleitung (RL) zugeordnet wird,
   daß nur das Codewort für die jeweils höchste Dringlichkeitsstufe innerhalb der Gruppe in diesen Zeitschlitz eingefügt wird und daß das Auftreten eines Ausnahme-Codeworts innerhalb der Gruppe vom Controller-Mikroprozessor ($\mu$P3) überprüft wird.

3. Verfahren nach Anspruch 1,
   **dadurch gekennzeichnet,**
   daß als Ausnahme-Codewort eine Folge logischer Einsen gewählt wird.

4. Flexibler Multiplexer zur Durchführung des Verfahrens nach Anspruch 1,
   **dadurch gekennzeichnet,**
   daß in jeder Anschlußeinheit (TA1, TA2, LA) eine mit dem Anschlußeinheits-Mikroprozessor ($\mu$P11, $\mu$P12, $\mu$P2) einerseits und der Haupt-Anforderungsleitung (RL) andererseits verbundene, rahmentaktgesteuerte Anforderungs-Sendeeinrichtung (TRQ11, TRQ12, TRQ2) vorgesehen ist und
   daß im Controller (CTR) eine mit dem Controller-Mikroprozessor ($\mu$P3) einerseits und der Haupt-Anforderungsleitung (RL) andererseits verbundene, rahmentaktgesteuerter Controller-Anforderungs-Empfangseinrichtung (RRQ) vorgesehen ist.

5. Anordnung zur Durchführung des Verfahrens nach Anspruch 2,
   **dadurch gekennzeichnet,**
   daß in jeder Anschlußeinheit (TA1', TA2', LA') einer Gruppe eine mit dem Anschlußeinheits-Mikroprozessor ($\mu$P11', $\mu$P12', $\mu$P2') einerseits und einer Gruppen-Anforderungsleitung (RL') andererseits verbundene, rahmentaktgesteuerte Anforderungs-Sendeeinrichtung (TRQ11', TRQ12', TRQ2') vorgesehen ist,
   daß ein Gruppen-Mikroprozessor ($\mu$P4) vorgesehen ist,
   daß eine mit dem Gruppen-Mikroprozessor ($\mu$P4) einerseites und der Gruppen-Anforderungsleitung (RL') andererseits verbundene, rahmentaktgesteuerte Anforderungs-Empfangseinrichtung (RRQ') vorgesehen ist,
   daß eine Gruppenanforderungs-Sandeeinrichtung (TRQ) vorgesehen ist und
   daß die Gruppenanforderungs-Sendeeinrichtung (TRQ) über einen Unsymmetrie/Symmetrie-Umsetzer (U31) und einen Symmetrie/Unsymmetrie-Umsetzer (U32) mit der Controller-Anforderungs-Empfangseinrichtung (RRQ) verbunden ist.

6. Anordnung zur Durchführung des Verfahrens nach Anspruch 3,
   **dadurch gekennzeichnet,**
   daß ein Widerstand (R, R') zwischen der Anforderungsleitung (RL, RL') und einer Quelle ( + ) für Logisch-Eins-Potential vorgesehen ist.

# FIG 1

FIG 2